# EUROPÄISCHE PATENTANMELDUNG

(11) **EP 3 783 449 A1**
(43) Veröffentlichungstag der Anmeldung: **24.02.2021**
(21) Anmeldenummer: 19192590.8
(22) Anmeldetag: 20.08.2019
(51) Int. Cl.: G05B 19/418

(54) **ALLOKATION VON GERÄTEN EINER TECHNISCHEN ANLAGE**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)

(57) **Zusammenfassung**

Vorgeschlagen wird ein Verfahren zur Zuweisung eines Geräts (7, 8) zu einer bestimmten Aufgabe, vorzugsweise zusätzlich einem bestimmten Projekt, innerhalb einer technischen Anlage, insbesondere Produktions- oder Prozessanlage, umfassend:
a) Zugreifen auf ein computerimplementiertes Geräteinventar der technischen Anlage;
b) Abrufen von Informationen aus dem computerimplementieren Geräteinventar, die eine Aussage darüber ermöglichen, ob das Gerät (7, 8) für die bestimmte Aufgabe verfügbar und geeignet ist;
c) Für den Fall, dass das Gerät (7, 8) für die bestimmte Aufgabe verfügbar und geeignet ist, automatisierte Zuweisung des Geräts (7, 8) zu der bestimmten Aufgabe, vorzugsweise zusätzlich zu einem bestimmten Projekt.

## Beschreibung

Die Erfindung betrifft einen Server eines Leitsystems mit den Merkmalen des Anspruchs 1. Außerdem betrifft die Erfindung ein Verfahren zur Zuweisung eines Geräts zu einer bestimmten Aufgabe, vorzugsweise zusätzlich einem bestimmten Projekt, innerhalb einer technischen Anlage mit den Merkmalen des Anspruchs 5. Außerdem betrifft die Erfindung ein Leitsystem einer technischen Anlage gemäß Anspruch 7.

Bei der Projektierung einer technischen Anlage wird die für die Automatisierung der jeweiligen Anlage notwendige Hardware eingeplant und allokiert (z.B. Server 1 --> IP Adresse des realen Servers), dabei ist es jedoch nicht bekannt, ob
- die tatsächlich zu verwendende Hardware noch verfügbar ist oder ggf. bereits durch ein anderes Projekt bzw. eine andere Anlage allokiert wurde;
- die Hardware für den jeweiligen Einsatz (z.B. als Einzelplatz, Verbundsystem etc.) überhaupt geeignet ist.

Auch in dem Fall, wenn eine projektübergreifende Hardware-Nutzung (d.h. die Nutzung der gleichen Hardware in verschiedenen Projekten) prinzipiell zulässig ist, kann sich das beschriebene Problem als komplex erweisen, denn die Hardware kann in der Regel nicht in beliebig vielen verschiedenen, sondern nur in einer bestimmten Anzahl von speziellen Projekten eingesetzt werden. Der Grund hierfür besteht unter anderem in Performance-Einschränkungen und darin, dass sich eine Hardware- bzw. eine Geräte-Instanz nicht für jedes Projekt als geeignet erweist.

Bei der Projektierung einer Anlage oder Teil-Anlage ist nicht bekannt, ob die tatsächlich zu verwendende Hardware (genauer gesagt die entsprechenden Geräte-Instanzen) für das jeweilige Projekt noch verfügbar ist oder ggf. bereits durch ein anderes Projekt allokiert wurde - und ob die Hardware überhaupt geeignet ist. Letzteres umfasst die Frage, ob die Hardware bzw. die Geräte-Instanz über die im Kontext des jeweiligen Projektes benötigten Merkmale, wie z.B. die Unterstützung von OPC UA/TLS, das Vorhandensein eines Webservers oder die Fähigkeit, Security-Events zu erfassen, verfügen.

Der Erfindung liegt die Aufgabe zugrunde, ein Verfahren und eine dazugehörige Serverarchitektur für ein Leitsystem einer technischen Anlage anzugeben, die eine Zuweisung eines Gerätes zu einer bestimmten Aufgabe innerhalb einer technischen Anlage automatisierbar und effizient gestalten.

Die zuvor formulierte Aufgabe wird durch einen Server eines Leitsystems einer technischen Anlage, insbesondere Produktions- oder Prozessanlage, mit den Merkmalen des Anspruchs 1 gelöst. Der erfindungsgemäße Server weist ein computerimplementiertes Geräteinventar auf, welches Informationen über wenigstens ein Gerät aufweist, wobei die Informationen eine Aussage darüber ermöglichen, ob das Gerät (bzw. eine Instanz des Gerätes) für eine bestimmte Aufgabe innerhalb der technischen Anlage aktuell verfügbar und geeignet ist.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Bei dem Server handelt es sich vorliegend um eine in ein Rechnernetz der technischen Anlage eingebundene physische Maschine. Sie wird auch als "Host" bezeichnet. Der Server stellt in der Regel eine Kommunikationsverbindung zu Automatisierungssystemen der technischen Anlage her und gibt Daten der technischen Anlage an Komponenten der technischen Anlage weiter. Bei dem Server kann es sich, ohne sich darauf zu beschränken, um einen SIMATIC PCS 7 Industrial Workstation Server der Firma SIEMENS handeln.

Ein (Feld-)Gerät ist entweder Erzeuger oder Empfänger eines oder mehrerer analoger oder binärer Signale. Beispiele für derartige Geräte sind Messumformer, binäre Sensoren oder Stellventile mit einem Stellungsregler. Unter dem Begriff Gerät werden vorliegend auch eine oder mehrere Instanzen des Geräts verstanden.

Ein für ein Gerät angelegter Geräteinventareintrag kann beispielsweise folgende (Meta-)Informationen enthalten:
a) die Geräte-IP Adresse (statisch oder dynamisch)
b) die Geräte-MLFB (statisch) (MLFB = Maschinenlesbare Fabrikatebezeichnung)
c) das Herstellergerätezertifikat (engl. Manufacturer Device Certificate, MDC) (statisch)
d) das anlagenspezifische bzw. anlagenbezogene Kundengerätezertifikat (engl. Customer Device Certificate, CDC)
e) das projektbezogene Gerätezertifikat (engl. Project related Device Certificate, PDC) oder (falls das Gerät in mehreren Projekten eingesetzt wird) eine Mehrzahl an derartigen Zertifikaten (dynamisch)
f) projektbezogene operative Zertifikate, die von der Geräteinstanz bereits bezogen wurden (dynamisch)
g) weitere Informationen bzgl. der technischen und mechanischen Features, u.a. bzgl. der Performance und der unterstützten Kommunikations- und/oder Applikationsprotokolle (statisch und/oder dynamisch)

Diese Informationen können von dem Gerät einmalig im Rahmen eines Originalitätsnachweises an das computerimplementierte Geräteinventar automatisch übertragen worden sein. Damit sichergestellt werden kann, dass diese gerätespezifischen Metainformationen nachweisbar vertrauenswürdig sind (d.h. die zugehörigen Eigenschaften des Gerätes (vom Werk) genau abbilden und bei der Übermittlung an das Geräteinventar nicht manipuliert werden können) können alle zuvor aufgeführten gerätespezifischen Metainformationen an das sogenannte Manufacturer Device Certificate (MDC) "gebunden" sein bzw. durch dieses integritäts- und authentizitätsgeschützt sein. Dies kann dadurch erreicht werden, dass die Metainformationen bzw. deren Checksumme (d.h. der über diese gesamten Daten unter Verwendung einer sicheren Hashfunktion gebildeter Hashwert) während der Entwicklung vom Hersteller durch das MDC signiert werden und in einem sicheren Bereich auf dem Gerät samt der Signatur abgelegt werden. Bei der Aufnahme in das Geräteinventar kann somit durch die Signaturvalidierung geprüft werden, ob die Daten unverändert sind.

Unter dem Begriff "geeignet" können diverse Metainformationen und -daten, z.B. konfigurations- und netzwerktechnische Aspekte sowie Security-Aspekte anlagen- bzw. projektspezifisch definiert werden. Netzwerktechnisch kann beispielsweise geprüft werden, ob die IP Adresse des Gerätes in einem Netzsegment des Leitsystems enthalten ist, in welchem der Einsatz des Gerätes angestrebt ist.

Im Hinblick auf Security kann z.B. genau geprüft werden, ob das jeweilige Gerät durch eine Vertrauensbeziehung an die technische Anlage, in welcher es eingesetzt werden soll, gebunden ist. Eine solche Prüfung kann durch die Validierung des Kundengerätezertifikats (CDC) des Gerätes erfolgen.

Wenn für ein Projekt aus bestimmten Gründen ausschließlich Geräte von einem bestimmten Hersteller benutzt werden dürfen, kann dies anhand des (bei der Fertigung in das Gerät geladenen) Herstellergerätezertifikats (MDC) des Gerätes geprüft werden.

Der erfindungsgemäße Server kann sicherstellen, dass bei einer Planung der technischen Anlage bzw. einer Zuweisung von Geräten bzw. Geräteinstanzen zu einzelnen Aufgaben innerhalb der technischen Anlage nur diejenigen Geräte/Geräteinstanzen verwendet werden, die für die Aufgabe auch geeignet und verfügbar sind. Die Einbindung eines Gerätes / eines Geräteinstanz, die bereits genutzt wird, kann damit proaktiv verhindert werden. Der Server kann mit dem neuartig ausgebildeten Geräteinventar eine stets aktuelle Auskunft über einen Allokationsstatus einzelner Geräte bzw. Geräteinstanzen ermöglichen.

Die in dem Geräteinventar hinterlegte Information über die Allokation des Gerätes umfasst mindestens den aktuellen Allokationsstatus des Gerätes. Dieser kann beispielsweise die Ausprägung "used" im Falle einer Verwendung des Gerätes bzw. einer Geräteinstanz oder "unused" im Falle keiner Verwendung aufweisen.

Das computerimplementierte Geräteinventar des Servers kann eine Information darüber enthalten, ob das Gerät (bzw. eine Instanz des Gerätes) aktuell einem bestimmten Projekt innerhalb der technischen Anlage zugeordnet ist, und, falls dies zutrifft, eine Information darüber enthalten, welchem bestimmten Projekt das Gerät aktuell zugeordnet ist. Zusätzlich können die Informationen eine Anzahl und/oder einen Typ der Projekte umfassen.

Der Projektzugehörigkeitshinweis des Gerätes kann hierzu beispielsweise weggelassen sein, falls das Gerät noch in keinem Projekt eingesetzt wird. Falls das Gerät in einem Projekt A eingesetzt wird, kann der Projektzugehörigkeitshinweis beispielsweise durch "used: Project A" ausgedrückt sein.

Alternativ oder zusätzlich kann das computerimplementierte Geräteinventar des Servers eine Information darüber enthalten, ob das Gerät (bzw. eine Instanz des Gerätes) aktuell einer bestimmten Aufgabe innerhalb der technischen Anlage zugeordnet ist, und, falls dies zutrifft, eine Information darüber enthält, welcher bestimmten Aufgabe das Gerät (bzw. eine Instanz des Gerätes) aktuell zugeordnet ist.

Vorteilhafterweise ist der Server dazu ausgebildet, die Information oder die Informationen auf das Gerät zu übertragen, um das Gerät in einen aktuellen Informationsstand zu versetzen. Server und Gerät können dadurch miteinander bezüglich der Information(en) synchronisiert werden. Eine Schnittstelle zwischen dem computerimplementierten Geräteinventar und dem Gerät ist dabei dazu befähigt, die in dem Geräteinventar hinterlegten Informationen (insbesondere kundenspezifische, anlagenspezifische oder projektspezifische Informationen) in das Gerät "zurückzuspielen", damit dieses stets auf dem aktuellsten Stand ist.

Die Informationen können im Gerät (ggf. nach einer vorangehenden Prüfung) durch das entsprechende kundenspezifische, anlagenspezifische oder projektspezifische Zertifikat signiert werden. Genauer gesagt, können die kundenspezifischen Informationen durch das kundenspezifische Zertifikat (CDC) und anlagenspezifische bzw. projektspezifische Informationen durch das zugehörige anlagenspezifische bzw. projektspezifische Zertifikat signiert werden. Dadurch wird erreicht, dass diese Informationen nachweisbar vertrauenswürdig (d.h. nicht unbemerkt manipulierbar sind.) Implizit bedingt dies auch eine Erweiterung des Gerätes, denn es sollte durch eine entsprechende Funktionalität erweitert werden, die es ermöglicht, relevante, als "dynamisch" oder "dynamisch oder statisch" gekennzeichnete Informationen bei Bedarf oder unter vordefinierten Bedingungen zu signieren und in einem sicheren Bereich im Gerät abzulegen.

Zusätzlich zu dem zuvor erläuterten regelmäßigen bzw. ereignisorientiert ausführbaren Abgleich der Daten und Signaturen in dem Gerät mit den Daten und den Signaturen in dem computerimplementierten Geräteinventar kann eine Ablage der herstellerspezifischen, kundenspezifischen und anlagenspezifischen Signaturen bzw. der signierten Hashwerte der herstellerspezifischen, kundenspezifischen und anlagenspezifischen Informationen in dem computerimplementierten Geräteinventar erfolgen.

Durch den Abgleich und die Hinterlegung der Signaturen bzw. Hashwerte in dem computerimplementierten Geräteinventar kann sich ein Benutzer oder ein computerimplementierter Dienst davon vergewissern, dass die im Geräteinventar hinterlegten allokationsrelevanten und auf bestimmte Geräte bezogenen Informationen stets mit dem Gerät synchronisiert sind, so dass jegliche Manipulation an den Daten erkannt wird und diese Daten somit als besonders zuverlässig gelten.

Die Aufgabe wird zudem gelöst durch ein Verfahren zur Zuweisung eines Geräts zu einer bestimmten Aufgabe, vorzugsweise zusätzlich zu einem bestimmten Projekt, innerhalb einer technischen Anlage, insbesondere Produktions- oder Prozessanlage, mit den Merkmalen des Anspruchs 5. Das erfindungsgemäße Verfahren umfasst die folgenden Schritte:
a) Zugreifen auf ein computerimplementiertes Geräteinventar der technischen Anlage;
b) Abrufen von Informationen aus dem computerimplementieren Geräteinventar, die eine Aussage darüber ermöglichen, ob das Gerät bzw. eine Instanz des Gerätes für die bestimmte Aufgabe verfügbar und geeignet ist;
c) Für den Fall, dass das Gerät für die bestimmte Aufgabe verfügbar und geeignet ist, automatisierte Zuweisung des Geräts bzw. der Instanz des Gerätes zu der bestimmten Aufgabe, vorzugsweise zusätzlich zu einem bestimmten Projekt.

Die Zuweisung des Geräts bzw. einer Instanz des Gerätes zu einer bestimmten, beispielsweise automatisierungstechnischen Aufgabe erfolgt in der Regel während einer initialen Engineering-Phase der technischen Anlage. Es ist aber auch möglich, dass die Zuweisung des Geräts nach Beendigung der initialen Engineering-Phase verändert oder erneuert werden muss. Für die Zuweisung des Geräts zu einer bestimmen Aufgabe wird vorliegend auch der Begriff Allokation verwendet.

Bevorzugt ist das computerimplementierte Geräteinventar auf einem ersten Server implementiert, während der Zugriff auf das computerimplementierte Geräteinventar von einem zweiten Server aus erfolgt. Der Zugriff kann mittels eines speziellen Engineering-Programms erfolgen.

Entsprechend der zuvor beschriebenen Weiterbildung des erfindungsgemäßen Servers können bei dem Zugriff auf das Geräteinventar nicht nur Informationen abgerufen werden, die eine Aussage darüber ermöglichen, ob das Gerät verfügbar und geeignet ist. Zusätzlich können die Informationen Aussagen darüber ermöglichen, ob das Gerät bzw. eine Instanz des Gerätes einem bestimmten Projekt (und wenn ja, welchem Projekt) zugeordnet ist, und welche aktuelle Rolle das Gerät bzw. eine Instanz des Gerätes aktuell ausübt (beispielsweise eine Rolle: "Operator Station Server").

Im Rahmen einer vorteilhaften Weiterbildung der Erfindung wird nach der Zuweisung des Geräts bzw. einer Instanz des Gerätes zu der bestimmten Aufgabe, vorzugsweise zusätzlich zu dem bestimmten Projekt, automatisiert eine Aktualisierung der zu dem Gerät bzw. der Instanz des Gerätes gehörigen Information in dem computerimplementierten Geräteinventar vorgenommen, um die betreffende Information aktuell zu halten.

Bevor eine erste Hardware-Allokation stattgefunden hat, können die oben genannten Attribute folgende initiale Werte haben:
- Allokationsstatus: "unused"
- Projektzugehörigkeitshinweis: weggelassen
- Aktuell ausgeübte Rolle: weggelassen

Diese drei Werte werden bei jedem Allokationsvorgang in Abhängigkeit vom Ergebnis der im Rahmen des Allokationsvorgangs nach bestimmten Kriterien durchgeführten Prüfung und dem Ergebnis der Allokation automatisch aktualisiert. Somit ist der Allokationsvermerk in dem computerimplementierten Geräteinventar dynamisch veränderbar.

Ergibt das Ergebnis der Prüfung im Rahmen eines Allokationsvorgangs beispielsweise, dass ein Gerät noch "unused" ist und dass es für das Projekt A als "ES Server" allokiert werden darf, ändern sich die Attribute wie folgt:
- Allokationsstatus: "used"
- Projektzugehörigkeitshinweis: "used: Project A"
- Aktuell ausgeübte Rolle: "used as: ES Server"

Aus dem computerimplementierten, vorteilhafterweise anlagenweit verfügbaren Geräteinventar können sich gleichzeitig unterschiedliche Projekte einer Engineering-Software bedienen. Im Gegensatz zum Stand der Technik können somit nicht nur Geräte-Typen instanziiert und dann instanzspezifisch konfiguriert werden, sondern bereits in dem Geräteinventar bestehende Geräte-Instanzen allokiert und lediglich projektspezifisch ausgeprägt werden.

Die Aufgabe wird außerdem gelöst durch ein Leitsystem mit den Merkmalen des Anspruchs 7. Das Leitsystem weist wenigstens einen ersten Server und wenigstens einen zweiten Server auf. Der erste Server ist wie zuvor erläutert ausgebildet und der zweite Server ist dazu ausgebildet, ein zuvor erläutertes Verfahren durchzuführen.

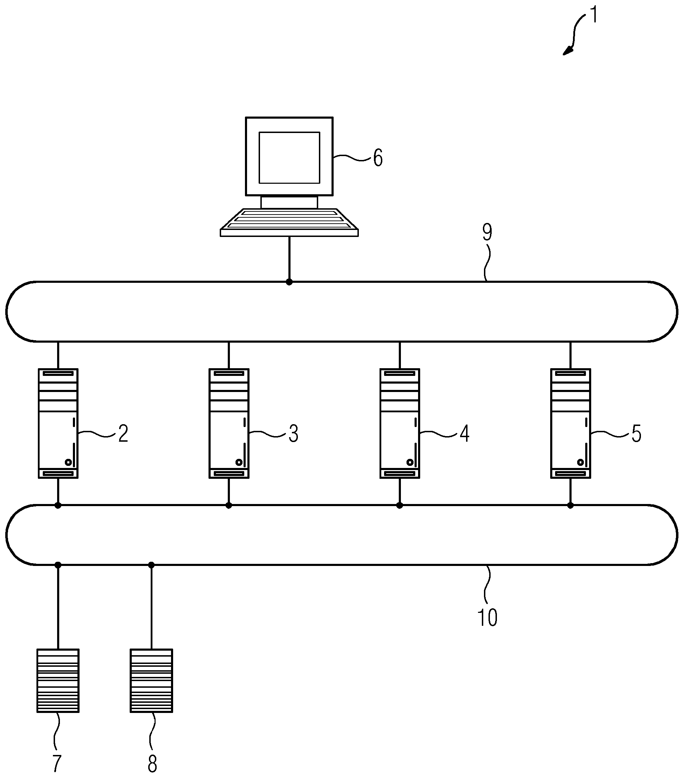

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein Teil eines erfindungsgemäßen Leitsystems 1 einer als verfahrenstechnische Anlage ausgebildeten technischen Anlage dargestellt. Das Leitsystem 1 umfasst einen ersten Server 2, einen zweiten Server 3, einen dritten Server 4 und einen vierten Server 5. Zudem umfasst das Leitsystem 1 einen Client 6. Der erste Server 2, der zweite Server 3, der dritte Server 4, der vierte Server 5 und der Client 6 sind über einen Terminalbus 9 miteinander und mit nicht dargestellten weiteren Komponenten des Leitsystems 1 wie einem Prozessdatenarchiv verbunden. Der Terminalbus 9 kann, ohne sich darauf zu beschränken, beispielsweise als Industrial Ethernet ausgebildet sein.

Der erste Server 2, der zweite Server 3, der dritte Server 4 und der vierte Server 5 sind über einen Anlagenbus 10 mit einem ersten Gerät 7 und einem zweiten Gerät 8 verbunden. Bei den Geräten 7, 8 kann es sich beispielsweise um Automatisierungsstationen handeln. Im Rahmen der Erfindung kann eine beliebige Zahl an Geräten 7, 8 mit den Servern 2, 3, 4, 5 verbunden sein. Der Anlagenbus 10 kann, ohne sich darauf zu beschränken, beispielsweise als Industrial Ethernet ausgebildet sein. Die Geräte 7, 8 können mit einer beliebigen Anzahl an Subsystemen (nicht dargestellt) verbunden sein.

Der erste Server 2 umfasst ein computerimplementiertes Geräteinventar. Der zweite Server 3 ist als Engineering Station Server 3 ausgebildet. Unter einem "Engineering Station Server" 3 wird vorliegend ein Server verstanden, der dazu ausgebildet ist, verschiedene Hardware- und Software-Projekte für das Leitsystem 1 der technischen Anlage zu erstellen, verwalten, archivieren und dokumentieren. Mithilfe von speziellen Software-Entwurfswerkzeugen (Engineering Toolset) sowie vorgefertigten Bausteinen und Plänen kann mittels des Engineering Station Servers 3 ein Zusammenspiel von leittechnischen Geräten und Einrichtungen der technischen Anlage geplant und verwaltet werden. Ein Beispiel hierfür ist ein SIMATIC Manager Server der Firma SIEMENS.

Ein Benutzer bzw. Operator hat mittels des Clients 6 mittels des Terminalbus 9 im Kontext einer Engineering Phase der technischen Anlage Zugriff auf den zweiten Server 3, um dort eine Engineering-Software zur Zuweisung (Allokation) der Geräte 7, 8 zu bestimmten Aufgaben innerhalb der technischen Anlage zu nutzen. Aus der auf dem zweiten Server 3 implementierten Engineering-Software heraus wird automatisiert auf das computerimplementierte Geräteinventar auf dem ersten Server 2 zugegriffen. Dabei werden Informationen aus dem computerimplementieren Geräteinventar abgerufen, die eine Aussage darüber ermöglichen, ob das erste Gerät 7 und das zweite Gerät 8 für die bestimmte Aufgabe verfügbar und geeignet sind.

Das erste Gerät 7 bzw. das zweite Gerät 8 werden anschließend automatisiert mittels der Engineering-Software der bestimmten Aufgabe zugewiesen. Dabei kann für den Fall, das beide Geräte 7, 8 potenziell für die Bearbeitung der Aufgabe in Frage kommen, mittels eines in der Engineering-Software implementierten Entscheidungsalgorithmus eine Auswahl zwischen den beiden Geräten 7, 8 getroffen werden.

Nach der Zuweisung des Geräts 7, 8 zu der Aufgabe wird dies von dem zweiten Server 3 in dem computerimplementierten Geräteinventar des ersten Servers 2 entsprechend vermerkt bzw. hinterlegt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Server (2) eines Leitsystems (1) einer technischen Anlage, insbesondere Produktions- oder Prozessanlage, welcher ein computerimplementiertes Geräteinventar aufweist, das Informationen über wenigstens ein Gerät (7, 8) aufweist, wobei die Informationen eine Aussage darüber ermöglichen, ob das Gerät (7, 8) für eine bestimmte Aufgabe innerhalb der technischen Anlage aktuell verfügbar und geeignet ist.

2. Server (2) gemäß Anspruch 1, wobei das computerimplementierte Geräteinventar eine Information darüber enthält, ob das Gerät (7, 8) aktuell einem bestimmten Projekt innerhalb der technischen Anlage zugeordnet ist, und das, falls dies zutrifft, eine Information darüber enthält, welchem bestimmten Projekt das Gerät (7, 8) aktuell zugeordnet ist.

3. Server (2) gemäß Anspruch 1 oder 2, wobei das computerimplementierte Geräteinventar eine Information darüber enthält, ob das Gerät (7, 8) aktuell einer bestimmten Aufgabe innerhalb der technischen Anlage zugeordnet ist, und das, falls dies zutrifft, eine Information darüber enthält, welcher bestimmten Aufgabe das Gerät (7, 8) aktuell zugeordnet ist.

4. Server (2) gemäß einem der vorangegangenen Ansprüche, der dazu ausgebildet ist, die Information oder die Informationen auf das Gerät (7, 8) zu übertragen, um das Gerät (7, 8) in einen aktuellen Informationsstand zu versetzen.

5. Verfahren zur Zuweisung eines Geräts (7, 8) zu einer bestimmten Aufgabe, vorzugsweise zusätzlich einem bestimmten Projekt, innerhalb einer technischen Anlage, insbesondere Produktions- oder Prozessanlage, umfassend:
a) Zugreifen auf ein computerimplementiertes Geräteinventar der technischen Anlage;
b) Abrufen von Informationen aus dem computerimplementieren Geräteinventar, die eine Aussage darüber ermöglichen, ob das Gerät (7, 8) für die bestimmte Aufgabe verfügbar und geeignet ist;
c) Für den Fall, dass das Gerät (7, 8) für die bestimmte Aufgabe verfügbar und geeignet ist, automatisierte Zuweisung des Geräts (7, 8) zu der bestimmten Aufgabe, vorzugsweise zusätzlich zu einem bestimmten Projekt.

6. Verfahren gemäß Anspruch 5, bei dem nach der Zuweisung des Geräts (7, 8) zu der bestimmten Aufgabe, vorzugsweise zusätzlich zu dem bestimmten Projekt, automatisiert eine Aktualisierung der zu dem Gerät (7, 8) gehörigen Information in dem computerimplementierten Geräteinventar gemäß einem der Ansprüche 1 bis 3 vorgenommen wird, um die betreffende Information aktuell zu halten.

7. Leitsystem (1) einer technischen Anlage mit wenigstens einem ersten Server (2) und wenigstens einem zweiten Server (3), bei dem der erste Server (2) gemäß einem der Ansprüche 1 bis 4 ausgebildet ist und bei dem der zweite Server (3) dazu ausgebildet ist, ein Verfahren gemäß Anspruch 5 oder 6 durchzuführen.
